(19) Europäisches Patentamt
European Patent Office
Office européen des brevets

(11) **EP 4 179 011 B1**

(12) **EUROPEAN PATENT SPECIFICATION**

(45) Date of publication and mention
of the grant of the patent:
**04.09.2024 Bulletin 2024/36**

(51) International Patent Classification (IPC):
**C08J 5/22** *(2006.01)*  **B01D 69/12** *(2006.01)*
**C08J 7/04** *(2020.01)*

(21) Application number: **21739690.2**

(22) Date of filing: **06.07.2021**

(52) Cooperative Patent Classification (CPC):
**C08J 5/2268; B01D 69/02; B01D 69/125;
B01D 71/601; C08J 7/0427;** B01D 2323/30;
B01D 2323/345; B01D 2323/40; B01D 2325/04;
B01D 2325/42; C08J 2327/06; C08J 2379/02;
C08J 2463/00; C08J 2479/02

(86) International application number:
**PCT/EP2021/068700**

(87) International publication number:
**WO 2022/008532 (13.01.2022 Gazette 2022/02)**

(54) **COMPOSITE ION-EXCHANGE MEMBRANE COMPRISING PEI AND PROCESS FOR PRODUCTION THEREOF**

ZUSAMMENGESETZTE IONENAUSTAUSCHERMEMBRAN MIT PEI UND VERFAHREN ZU IHRER HERSTELLUNG

MEMBRANE D'ÉCHANGE D'IONS COMPOSITE COMPRENANT DU PEI ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2020 EP 20184461**

(43) Date of publication of application:
**17.05.2023 Bulletin 2023/20**

(73) Proprietor: **HurraH SarL
8281 Kehlen (LU)**

(72) Inventors:
• **DEBOLI, Francesco
8281 Kehlen (LU)**
• **DONTEN, Mateusz
8281 Kehlen (LU)**

(74) Representative: **Brantsandpatents bv
Pauline Van Pottelsberghelaan 24
9051 Ghent (BE)**

(56) References cited:
**WO-A1-2019/111475    CN-A- 101 757 860**

US-A- 5 096 951      US-A1- 2011 290 727
US-A1- 2020 078 736

• WANG SHENGYE ET AL: "Selenium(VI) and copper(II) adsorption using polyethyleneimine-based resins: Effect of glutaraldehyde crosslinking and storage condition", JOURNAL OF HAZARDOUS MATERIALS, ELSEVIER, AMSTERDAM, NL, vol. 386, 8 November 2019 (2019-11-08), XP086009500, ISSN: 0304-3894, [retrieved on 20191108], DOI: 10.1016/J.JHAZMAT.2019.121637

• DAI JICUI ET AL: "A sandwiched bipolar membrane for all vanadium redox flow battery with high coulombic efficiency", POLYMER, ELSEVIER SCIENCE PUBLISHERS B.V, GB, vol. 140, 24 February 2018 (2018-02-24), pages 233 - 239, XP085361279, ISSN: 0032-3861, DOI: 10.1016/J.POLYMER.2018.02.051

- JUNG HYUNCHUL ET AL: "Effect of crosslinking on the CO2adsorption of polyethyleneimine-impregnated sorbents", CHEMICAL ENGENEERING JOURNAL, ELSEVIER, AMSTERDAM, NL, vol. 307, 3 September 2016 (2016-09-03), pages 836 - 844, XP029774771, ISSN: 1385-8947, DOI: 10.1016/J.CEJ.2016.09.005
- XIAOMING XU ET AL: "Fabrication of Cross-Linked Polyethyleneimine Microfibers by Reactive Electrospinning with In Situ Photo-Cross-Linking by UV Radiation", BIOMACROMOLECULES, vol. 11, no. 9, 13 September 2010 (2010-09-13), US, pages 2283 - 2289, XP055759638, ISSN: 1525-7797, DOI: 10.1021/bm1003509
- MELANIE SOSSNA: "Strukturausbildung von Celluloseestermembranen", STRUKTURAUSBILDUNG VON CELLULOSEESTERMEMBRANEN, 16 February 2006 (2006-02-16), Hannover (DE), pages 31 - 38, XP055758656, Retrieved from the Internet <URL:https://core.ac.uk/download/pdf/237445922.pdf> [retrieved on 20201210]
- ALMARZOOQI FAISAL A ET AL: "A comparative study of image analysis and porometry techniques for characterization of porous membranes", JOURNAL OF MATERIAL SCIENCE, KLUWER ACADEMIC PUBLISHERS, DORDRECHT, vol. 51, no. 4, 27 October 2015 (2015-10-27), pages 2017 - 2032, XP035914518, ISSN: 0022-2461, [retrieved on 20151027], DOI: 10.1007/S10853-015-9512-0

**Description**

**FIELD OF THE INVENTION**

The present invention relates to an ion-exchange membrane and a producing method therefor.

**BACKGROUND**

Ion-exchange membranes are known in the art. They generally comprise functional moieties which allow conductivity for certain ions, generally either cations or anions but further selectivity is possible, while resisting other species (and often electric currents). An issue is that only a limited group of ionomers allows to reach mechanically stable films. Further, those are typically complex multiblock copolymers known to be expensive and difficult to process.

A solution therefor is the use of composites. Composites may combine the material properties of various different materials to obtain an improved result. In the present case, composites generally comprise a support, typically a porous support, nonwoven or membrane which is in some way functionalized with ion exchange moieties. An issue with such composites is that only a limited group of ionomers allows to reach mechanically stable films. Further, those are typically complex multiblock copolymers known to be expensive and difficult to process.

US 9 266 069 discloses an ion-exchange membrane comprising an ion-exchange layer made of a cationic polymer and/or an anionic polymer and a supporting layer, wherein the ion-exchange layer is formed on the supporting layer by printing. An issue with such a method is that it only applies to polymers which can be printed easily. Furthermore, the process is slow and requires expensive printing equipment.

US 5 795 668 discloses fuel cell and a battery with a reinforced polymeric ion exchange membrane are disclosed. The membrane comprises (a) a porous support layer, preferably of fluorine-containing polymer, and (b) an ion exchange resin, preferably a fluorinated ionomer (s) supported on one or both sides of the porous support layer. These are connected by heat-consolidation of both polymers. Disadvantages of this process is that heat consolidation causes permanent damage to both polymers. Additionally, it may cause microscopic tears in the ion-exchange layer. These tears may act as gateways for any species to pass through the ion exchange layer, which has detrimental results for the selectivity of the composite ion exchange membrane.

US2011290727 discloses a process for preparing a composite membrane comprising the steps of: (i) applying to a porous support having an average surface energy of 1 to 30 mN/m a composition having a viscosity of 1 to 5,000 mPa·s; and (ii) increasing the viscosity of the composition to a value higher than 30,000 mPa·s within 30 seconds after the composition has been applied to the support; wherein the composition applied in step (i) has a surface tension that is at least 25 mN/m higher than the average surface energy of the porous support.

The use of poly(ethylenimine) in combination with a support has been described for the capture of $CO_2$ from air. However, these combinations are not suitable for using in solution of an electrolyte. In particular the PEI shows significant swelling, lack of adherence between PEI and support and tearing. Additionally, these supports were generally spherical particles, which are not well suited for ion exchange membranes. An additional issue is that PEI may dissolve into various polar electrolytes, which are commonly used in battery technology.

**SUMMARY OF THE INVENTION**

The present invention and embodiments thereof serve to provide a solution to one or more of above-mentioned disadvantages. To this end, the present invention relates to a composite ion exchange membrane according to claim 1

Poly(ethylenimine) is known for its high concentration of amino groups. However, it can be difficult to process and handle. Furthermore, it has lacking mechanical properties and shows significant swelling upon contact with an electrolyte. These issues are largely avoided by the use of a porous support providing mechanical stability.

Preferred embodiments of the composite ion exchange membrane are shown in claims 1-4.

In a second aspect, the present invention relates to a process for producing such a composite ion exchange membrane according to claim 5. Advantageously, these processes can allow PEI to be incorporated into a composite ion exchange membrane. Preferred embodiments of the process are shown in claims 6-15. These include processes which are quick and can be scaled up.

PEI is known as an ionomer which does not readily form mechanically stable films. In order to improve mechanical stability Pei can be combined with multiblock copolymers that are often expensive and difficult to process.

**DETAILED DESCRIPTION OF THE INVENTION**

The present invention concerns a process for making a composite ion exchange membrane, said composite ion exchange membrane comprising at least one ion exchange polymer adhering to a porous support.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The term ionomer is used as a synonym for polymers with functional moieties suitable for ion exchange. An ionomer or ion exchange polymer is a polymer comprising ionized or ionizeable moieties. These moieties may be pendant group moieties or part of the polymer backbone.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

"Poly(ethylenimine)", "PEI" or "polyaziridine" is a polymer with repeating unit composed of the amine group and two aliphatic $CH_2CH_2$ spacer. Said poly(ethylenimine) may be linear or branched. Branched PEI generally contains primary, secondary and tertiary amino groups. PEI is known as CAS number 9002-98-2 and IUPAC name poly(iminoethylene).

The viscosity of the uncured coating formulations can be measured following the ISO procedure ISO:3219:1993 - determination of viscosity using a rotational viscometer with defined shear rate.

The thickness of a substrate prior to coating thereof can be measured by using a digital micrometer. For all measurements reported herein, ID-U, Mitutoyo NK, Japan was employed.

The thickness of the coating and the thickness of a coated substrate is measured by image analysis of microscopy images. Preferably, a metallurgical microscope (BX60, Olympus, Japan) is used in combination with image analysis software (Amscope, Amscope, US).

The substrate median pore size and volume porosity are determined by mercury intrusion porosimetry. Preferably, a Quantachrome Pore Master 33 (Anton Paar GmbH, Austria) is used. Mercury intrusion pressures in the range of VAC+0.1 PSI to 33000 PSI, corresponding to a pore size range of 100 μm to 6 nm, are used for the measurements.

The invention relates to a Composite ion exchange membrane as defined in claim 1.

The porous substrate is a porous polymer material. It guarantees the mechanical stability of the composite ion exchange membrane. This is particularly important advantageous when used in combination with poly(ethylenimine) PEI as ion exchange layers as it shows significant swelling when contacted with the electrolyte. In a preferred embodiment, said ion exchange layer comprises branched poly(ethyleneimine). Branched poly(ethyleneimine) is easier produced and processed than linear poly(ethyleneimine) of an equal molecular weight. In practice this allows the use of higher molecular weight branched poly(ethyleneimine) as ionomer in a production process at scale.

The "median pore size" as described herein refers to the median pore size diameter d50. That is to say, 50% of the pores have a diameter smaller than the median pore size diameter d50.

The fabricated membranes have been observed under a metallurgical microscope (BX60M, Olympus, Japan) to assess the ion-exchange coating continuity and homogeneity.

Cross sections of the membranes were also observed, the "thickness" of the ion exchange coating and the substrate was quantified by means of image analysis software of the microscope (AmScope, USA).

In a preferred embodiment, the porous substrate has a high-volume porosity. Preferably the volume porosity is at least 30%, more preferably the volume porosity is at least 40%, more preferably the volume porosity is at least 50%, more preferably the volume porosity is at least 60%, more preferably the volume porosity is at least 70%. The median pore size diameter d50 needs to be contained between 10 and 100000 nm. In a preferred embodiment, the median pore size diameter d50 is below 10 000 nm, more preferably the median pore size diameter d50 is below 3 000 nm, more preferably the median pore size diameter d50 is below 1 000 nm, more preferably the median pore size diameter d50 is below 900 nm, more preferably the median pore size diameter d50 is below 800 nm, more preferably the median pore size diameter d50 is below 700 nm, more preferably the median pore size diameter d50 is below 600 nm, more preferably the median pore size diameter d50 is below 500 nm. A high-volume porosity is beneficial for obtaining a high ionic conductivity of the composite ion exchange membrane.

The porous support preferably has a thickness between 10 and 600 $\mu$m. In a preferred embodiment, the thickness of the porous support is below 600 $\mu$m, more preferably the thickness of the porous support is below 500 $\mu$m, most preferably the thickness of the porous support is below 400 $\mu$m. In a preferred embodiment, the thickness of the porous support is at least 10 $\mu$m, more preferably at least 25 $\mu$m, more preferably the thickness of the porous support is at least 50 $\mu$m, more preferably the thickness of the porous support is at least 75 $\mu$m, more preferably the thickness of the porous support is at least 100 $\mu$m, more preferably the thickness of the porous support is at least 125 $\mu$m, more preferably the thickness of the porous support is at least 150 $\mu$m, more preferably the thickness of the porous support is at least 175 $\mu$m, most preferably the thickness of the porous support is at least 200 $\mu$m. A ratio (A/B) of a thickness of the ion-exchange layer (A) to a thickness of the porous support layer (B) is preferably 0.2 or less. A sufficiently thick porous support is required to ensure high electric resistance. This is in particularly important when ion exchange membranes are used in electrochemical cells, such as galvanic cells or electrolytic cells, in particular battery technology. A sufficiently thick porous support with respect to the ion exchange layer is required to ensure sufficient mechanical stability. However, there is clear economic pressure to develop thin ion exchange membranes to reduce space. Thin ion exchange membranes allow reductions in space, which can be used for example to produce smaller batteries or batteries with a higher energy capacity per volume.

The ion exchange layer has a thickness between 10 and 100 $\mu$m, more preferably between 5 and 100 $\mu$m, most preferably between 5 and 50 $\mu$m. A minimum thickness is needed to prevent tears and wear leading to the composite membrane becoming porous, thereby leading to crossover of undesired species. A certain minimum thickness is also required to ensure sufficient selectivity towards anions and reduce permeability of small molecules through the ion exchange layer. The maximum thickness is both for practical and economic reasons. Increasing thickness leads to more swelling with respect to the entire composite layer.

In another preferred embodiment, the depth of impregnation of the ion exchange coating into the porous substrate is less than 30% of the thickness of the coating, preferably less than 15% of the thickness of the coating, more preferably less than 5% of the thickness of the coating. The impregnation can be measured by destructive test, where the ion exchange coating is cut open and inspected under a microscope.

In another more preferred embodiment, the ion exchange layer consists of an interpenetrating polymer network (IPN), said interpenetrating polymer network comprising PEI interlaced with a fixing polymer matrix, wherein said fixing polymer matrix is adhered to said porous support.

The ion exchange layer, that is to say the outer layer of the composite ion exchange membrane does not need to be porous. It is preferred that the composite ion exchange membrane is continuous and does not tear or wear leading to pores or holes. However, it does need to be suited for forming ion conducting channels there through. That is to say that the ion exchange layer is preferably not porous, but does selectively allow the passage of (certain) anions. A not porous or continuous ion exchange layer is preferable as this prevents fuel-crossover in fuel cells. It can also prevent degradation or mass-loss in batteries.

In a preferred embodiment, PEI is crosslinked. This may be achieved by the use of a crosslinking agent suitable for PEI. It may also be achieved by modifying PEI so that it has secondary reactive groups, suitable for crosslinking. These secondary reactive groups may directly link PEI polymer chains, or bond to a crosslinking agent.

In a different preferred embodiment, PEI is interlaced with a crosslinked polymer, forming an interpenetrating polymer network (IPN) which is adhered to the porous support. This may be achieved by curing a second polymer in the presence of PEI. In practice, a secondary reactive monomer or polymer miscible with PEI and PEI are required. These are thoroughly mixed, coated onto the porous support and subsequently cured. It is not required that upon curing, the secondary reactive monomer or polymers bond with PEI. Due to the thorough mixing, PEI chains are interlaced with the cured polymer chains. Covalent bonds between the two are not necessary. The cured ion exchange layer forms an interpenetrating polymer network (IPN). This is particularly advantageous for adhering PEI. It allows fine-tuning of the amine group concentration. It may reduce swelling in contact with an electrolyte. Additionally, it allows advantages with respect to the processing. For example, the secondary reactive monomer or polymer may be used to increase the viscosity of the mixture, and thus limit impregnation. It also allows the use of radical polymerization techniques to adhere PEI. Additionally, it does not require any solvent, which is economically and ecologically desirable.

In other words, PEI is interlaced in a secondary polymer matrix, without being covalently bonded thereto. This secondary polymer matrix is formed by curing radicalizeable monomers, oligomers or polymers. The present process thus provides a way to obtain a composite ion exchange membrane for polymers where generally several more reaction steps, related to grafting and copolymerization are required. Furthermore, no solvents are required. Additionally, the mechanical and ion exchange properties can be adjusted. For example, IPN networks have different microscopic structure, different glass transition temperatures (or rather regions), can show rubber-like properties without curing the functional ion exchange polymer, and so forth. This advantageously allows the production of composite ion exchange membranes with a very wide range of materials.

An interpenetrating polymer network (IPN) as described herein is a polymer comprising two or more networks which are at least partially interlaced on a polymer scale, but are not covalently bonded to each other. The network cannot be separated unless chemical bonds are broken. The two or more networks can be envisioned to be entangled in such a way that they are concatenated and cannot be pulled apart.

In a second aspect, the invention relates to a process for making a composite ion exchange membrane, comprising the steps of:

- Providing a porous support having a thickness between 10 and 600 $\mu$m and an average pore size between 10 and 10000 nm,
- coating an ion exchange layer comprising poly(ethylenimine) (PEI) onto at least one side of said porous support.

In a preferred embodiment, the invention relates to a process for making a composite ion exchange membrane, comprising the steps of:

- Providing a porous support having a thickness between 10 and 600 $\mu$m and an average pore size between 10 and 10000 nm,
- coating a curable ion exchange precursor comprising poly(ethylenimine) (PEI) onto at least one side of said porous support, and
- curing said curable ion exchange precursor to form a cured ion exchange layer comprising PEI.

The curable ion exchange precursor can be applied to the porous support using general coating techniques. In a more preferred embodiment, the porous support can be coated by blade coating. The inventors have seen surprisingly good results with blade coating in combination with a sufficiently high viscosity of the ion exchange precursor. This is a simple process which does not require solvents, and can be applied to a wide range of ion exchange precursor compositions as well as porous supports. Furthermore, the same process (and process equipment) can thus be used for various different types of ion exchange membranes.

In a preferred embodiment, the porous substrate is impregnated with a cross linking solution in a first step, and PEI is applied to the porous support by blade coating in a subsequent step. This preferred embodiment prevents or substantially reduces the penetration of PEI into the porous substrate.

In an embodiment, the curable ion exchange precursor is coated onto at least one side of said porous support. In another embodiment, the curable ion exchange precursor is applied to both sides of said porous support. Coating on both sides is also possible using the presented method of fabrication. This may be beneficial for fabrication of bipolar membranes that possess both anion and cation exchange groups.

In another preferred embodiment, PEI is coated onto one side of the porous support and an anionic ionomer is coated onto the opposing side of the support. This is beneficial for fabrication of bipolar membranes that possess both anion and cation exchange groups. An anionic ionomer is a polymer which comprises ion-exchange moieties which are negatively chargeable functional groups, in either ionic or protonated form. Particular examples of suitable anionic ionomers include but are not limited to : vinylsulfonic acid salts such as vinyl sulfonic acid, vinyl sulfonic acid sodium salt, sodium styrene sulfonate, lithium styrene sulfonate, sulfopropyl acrylate potassium salt, methyl propene sulfonic acid sodium salt, sodium vinylbenzenesulfonate or sulfonated polymers such as poly(sodium styrenesufonate), sulfonated polyetheretherketone, sulfonated poly(ethersulfone).

In a preferred embodiment of the invention, the curable ion exchange precursor has a viscosity of at least 3000 mPas. More preferably the curable ion exchange precursor has a viscosity of at least 3500 mPas, even more preferably the curable ion exchange precursor has a viscosity of at least 4000 mPas, even more preferably the curable ion exchange precursor has a viscosity of at least 4500 mPas, even more preferably the curable ion exchange precursor has a viscosity of at least 5000 mPas, even more preferably the curable ion exchange precursor has a viscosity of at least 6000 mPas, even more preferably the curable ion exchange precursor has a viscosity of at least 7000 mPas. The viscosity of the curable ion exchange precursor should be sufficiently high as to limit the penetration of the ion exchange precursor into the pores of the porous support prior to curing, and consequently limit the impregnation of the cured ion exchange layer in the porous support. This is beneficial for obtaining composite ion exchange membranes with higher conductivity.

In a further preferred embodiment, the viscosity can be increased by adding rheology modifiers and / or thickening agents. In a further preferred embodiment, thickening agents are chosen from the list of acrylic acid, polyvinylpyrrolidone (PVP) and poly(N-vinylimidazole) (PVI). In another further preferred embodiment, the monomers used in the curable ion exchange precursor can be prepolymerized to oligomers or polymers to increase their viscosity. In another further preferred embodiment, thickening agents such as precipitated or fumed silica can also be added. Preferably said thickening agents constitute a small part of the formulation, preferably less than 10% by weight.

Porous supports for use in methods according to the present invention preferably comprise a polymer matrix. The porous support may be substantially made of thermoplastic polymer. A first class of suitable thermoplastic polymer materials are halogenated polymers such as but not limited to poly(vinyl chloride) (PVC) and poly(vinylidene chloride) (PVDC), polyolefins such as polyethylene and polypropylene, or acrylic polymer materials, such as a (meth)acrylate homo or copolymer, e.g. poly(methyl methacrylate) (PMMA). A second class of suitable thermoplastic polymer materials are polymers obtained from polymerization of one or more ethylenically unsaturated monomer(s) selected from the group consisting of C1-C20-alkyl (meth)acrylates, vinyl and allyl esters of carboxylic acids of up to 20 carbon atoms, vinyl ethers of C1-C8 alcohols, vinyl aromatics of up to 20 carbon atoms, ethylenically unsaturated nitriles, vinyl halides, C1-C10-hydroxyalkyl(meth)acrylates, (meth)acrylamide, (meth)acrylamide substituted on the nitrogen by C1-C4-alkyl, ethylenically unsaturated carboxylic acids, ethylenically unsaturated dicarboxylic acids, half-esters of ethylenically unsaturated dicarboxylic acids, anhydrides of ethylenically unsaturated dicarboxylic acids, non-aromatic hydrocarbons having at least two conjugated double bonds, C1-C8 alkenes and mixtures of these monomers. Specific examples of polymers of the second class are poly(vinylacetate) (PVAc), polypropylene and polyacrylate. The matrix can be made of a blend of any combination of the above polymers of the first class and/or second class, or can be made of, or comprise a copolymer of a halogenated monomer, olefin monomer, or acrylic monomer (e.g. in an amount of 75% mole or more) and a monomer as indicated in the second class above (e.g., up to 25% mole). Poly(vinyl chloride) is a preferred polymer for the matrix, advantageously obtained from unplasticised, vinyl chloride polymer. In another embodiment, the porous support may be a porous polymer matrix in which filler particles are embedded. Such porous supports are referred to as filled porous supports. A filled porous support refers to a membrane comprising a polymeric matrix in which an advantageously inorganic material is dispersed. The polymeric matrix may be substantially made of the thermoplastic polymer materials described above.

In a more preferred embodiment, the porous support comprises a thermoplastic polymer material. More preferably, said thermoplastic polymer material is poly(vinyl chloride). More preferably, the porous support is made of a powder blend comprising a thermoplastic polymer material and at least one inorganic filler embedded in the porous support. Said thermoplastic polymer material is preferably poly(vinyl chloride) having a viscosity of at least 60 measured according to ISO 1628-2. Preferably, the inorganic filler consists of sulfuric acid precipitated silica particles. The use of sulfuric acid precipitated silica provides a hydrophilic porous support and prevents addition of wetting agents which is source of leachables. Preferably, the porous support is devoid of oils and/or plasticizers thereby improving oxidation resistance of the membrane and minimizing or having no leachable amounts. This porous support can be used in aggressive environment, especially low pH such as concentrated sulfuric acid (for example $H_2SO_4$ at d=1.28), phosphoric acid (for example $H_3PO_4$ at d=1.25), mixture of hydrogen peroxide and sulfuric acid (so called Piranha solution). The porous support is compatible with solvents such as alcohols, aliphatic hydrocarbon, acids, oils and bleach. The porous support shows high mechanical resistance and high thermal stability compared to the membranes of the prior art.

The coating of an ion exchange layer comprising poly(ethylenimine) (PEI) onto at least one side of said porous support can be achieved in various ways. The present invention provides three different methods to obtain such a coating:

- crosslinking PEI with a bifunctional crosslinking agent which reacts with the amine groups;
- creating modified PEI, adding a secondary reactive group and consecutively crosslinking said modified PEI by curing said secondary reactive groups; and
- mixing PEI with a curable resin, and curing said curable resin to form an interpenetrating polymer network (IPN).

Each of these approaches will be discussed in more detail.

Crosslinking PEI with a bifunctional crosslinking agent reacting with the amine groups

In a preferred embodiment, the process comprises the steps of:

- providing a porous support having a thickness between 10 and 600 μm and a median pore size between 50 and 1000000 nm,
- impregnating at least one side of said porous support with a reactive composition comprising at least one bifunctional crosslinker,
- Coating PEI onto said reactive surface.

In a preferred embodiment, the bifunctional crosslinker is an aldehyde. Aldehydes are known to react with amino groups through a Schiff Base reaction giving an imide or through a Michael addition reaction to form a single C-C bond. This mechanism is suitable to crosslink PEI as a condensation reaction. A preferred aldehyde is glutaraldehyde. It has been found well suited for the crosslinking of PEI in practice. In a further preferred embodiment, the process comprises the steps of:

- providing a porous support having a thickness between 10 and 600 $\mu$m and a median pore size between 50 and 1000000 nm,
- applying a layer of PEI onto the porous support,
- curing said layer of PEI by soaking or submersing the layer of PEI in a bath comprising glutaraldehyde (GTA),
- washing the membrane in water to remove GTA residue.

In a preferred embodiment, the PEI layer is cured by submersion of the entirety of the membrane, that is to say submersion of the porous support and the coated PEI layer into a bath comprising GTA.

In a preferred embodiment, the bath comprising glutaraldehyde is an aqueous solution of 1-10 wt.% glutaraldehyde, preferably 2-8 wt.% GTA, more preferably 3-7 wt.% GTA, most preferably about 5 wt.% GTA.

In another preferred embodiment, the bifunctional crosslinker is a multi-functional epoxy. In a more preferred embodiment, the multi-functional epoxy is selected from the list of: diglycidyl ether, butanediol diglycidyl ether, diepoxyoctane and mixtures thereof.

In a more preferred embodiment, the process comprises the steps of:

- providing a porous support having a thickness between 10 and 600 $\mu$m and a median pore size between 50 and 1000000 nm,
- mixing PEI with a multifunctional epoxy crosslinker to form a reactive PEI - epoxy mixture,
- applying a layer said reactive PEI-epoxy mixture onto the porous support, and
- curing said reactive PEI-epoxy mixture.

Advantageously, said reactive PEI-epoxy mixture can be cured in air at room temperature. No initiation is required. Higher temperatures may be used to speed up the reaction. It should however be noted that higher temperatures also decrease the viscosity of the mixture, which leads to an increase in impregnation which is generally not desired.

Advantageously, the pot-life of the reactive PEI-epoxy mixture is sufficiently long that the mixture can be coated and subsequently cured to air. Compared to the use of aldehydes, a bath and subsequent wash are thus not required.

Performance of PEI crosslinked with aldehydes and epoxy did not appear to be significantly different. However, due to different reaction chemistry, both production processes have different advantages.

Curing modified PEI

A second method to coat PEI onto a porous substrate relates to modifying PEI so that it has a secondary reactive group. This can be achieved by grafting, copolymerization and other methods known in the art. These secondary reactive groups can then be crosslinked either directly or in combination with a crosslinking agent.

In a preferred embodiment, the secondary reactive groups are vinyl groups. In a more preferred embodiment, allyl-terminated poly(ethyleneimine) (PEI-ENE) can be synthesized through grafting. This can be achieved by reaction with molecules capable of reacting with PEI (such as aldehydes and epoxies) while also having vinyl functionality. In a more preferred embodiment, suitable epoxy-vinyl grafting agents are chosen from the list of epoxy decene, allyl glicidyl ether and glycidyl methacrylate. PEI-ENE can be synthetized by selective addition reaction of the epoxy moiety with the amine groups present in the chemical structure of PEI, achieving then the grafting of vinyl moieties. The polymer crosslinking is obtained in a second step by means of thermally or UV initiated radical curing. Other monomers such as mono or multifunctional vinyls or acrylates can be formulated with PEI-ENE to modify the properties of the crosslinked polymer.

In a more preferred embodiment, the process comprises the steps of:

- providing a porous support having a thickness between 10 and 600 $\mu$m and a median pore size between 50 and 1000000 nm,
- creating a reactive allyl terminated poly(ethyleneimine) (PEI-ENE) by addition reaction of the amine groups present in PEI with epoxy - vinyl grafting agents,
- creating a curable PEI-ENE mixture by addition of a radical initiator and optionally mono or multifunctional monomers,
- applying a layer said curable PEI-ENE mixture onto the porous support, and
- curing said reactive PEI-ENE mixture by the activation of said radical initiator.

Radical curing of curable PEI-ENE mixture can be initiated in various ways known in the art, such as thermal initiation and UV-initiation. When thermal initiation is used, low temperatures are preferred for process considerations. In case of UV curable formulations commercial photoinitiators can be used, such as Irgacure 500, Omnirad 819, TPO and Omnirad 1173. In case of thermal curing common thermal initiator such as AIBN, benzoyl peroxide and potassium persulfate can be used. In a more preferred embodiment, the radical polymerization is UV-initiated. UV-initiation is beneficial as it allows better reaction control and better temperature control upon curing. This is particularly advantageous to scale-up the process. Temperature control is particularly important. Due to the lack of solvent, removal of heat can be more difficult. Furthermore, polymers such as PEI, optional monomers and polymers added to the mixture and the porous support are generally not known for their high heat conductivity. This can lead to hot-spots where heat builds up, such as in or near the pores and may cause material damage or undesired reactions. Elevated temperature of curing may lead to impregnation of the ion exchange precursor into the pores of substrate, as high temperature decreases the viscosity of yet not cured ion exchange precursor. Generally, this impregnation is not desired. This secondary effect may be counteracted by further increasing the viscosity of the ion exchange precursor.

Interlacing PEI in an interpenetrating polymer network (IPN)

A third method to coat PEI onto a porous substrate relates to interlacing PEI in a polymer matrix, without PEI chains being bonded or cured among each other or to the polymer matrix it is interlaced with.

In particular, PEI chains are mixed with curable monomer, oligomer or polymers. After thorough mixing, this mixture is coated onto the porous support and subsequently cured. It is not required that upon curing, the radicalizeable monomers, oligomers or polymers bond with PEI. Due to the thorough mixing, the functional polymer is interlaced with the cured polymer. Covalent bonds between the two are not necessary. The ion exchange layer forms an interpenetrating polymer network (IPN). This is particularly advantageous as it provides for a coating which has different properties. For example, PEI is known to show significant swelling upon contact with an electrolyte. In an interlaced polymer network, this swelling can be significantly reduced. Furthermore, it is believed that any swelling is less likely to damage the bonds of the cured polymer structure as it allows for a certain level of relative movement of the polymer chains with respect to one another. As a result, issues related to mechanical properties and processability of PEI can be at least partially overcome by locking said functional polymers in a cured IPN.

In a preferred embodiment, PEI is mixed with radicalizeable monomer, oligomer or polymers. Said radicalizeable monomer, oligomer or polymer are then cured. This fixes PEI molecules in a polymer matrix without PEI being covalently bonded thereto.

This process has the advantages of radical polymerization chemistry. Furthermore, it does not require additional reaction steps (such as grafting or copolymerization). In a preferred embodiment, PEI is miscible with the radicalizeable monomer, oligomer or polymer mixture. This ensures for proper micro mixing. Additionally, it means that no solvents are required in the process. Furthermore, the mechanical properties as well as the ion exchange properties (such as density of amino moieties) can be adjusted easily. For example, IPN networks have different microscopic structure, different glass transition temperatures (or rather regions), can show rubber-like properties without curing the functional ion exchange polymer, and so forth.

An interpenetrating polymer network (IPN) as described herein is a polymer comprising two or more networks which are at least partially interlaced on a polymer scale, but are not covalently bonded to each other. The network cannot be separated unless chemical bonds are broken. The two or more networks can be envisioned to be entangled in such a way that they are concatenated and cannot be pulled apart. The invention is further described by the following non-limiting examples which further illustrate the invention, and are not intended to, nor should they be interpreted to, limit the scope of the invention.

## EXAMPLES AND/OR DESCRIPTION OF FIGURES

Examples 1 : Vinyl functionalized PEI

An allyl terminated poly(ethyleneimine) (PEI-ENE) was be synthesized through grafting. The addition of vinyl functionality to PEI allows to exploit radical curing reactions for crosslinking.

The allyl terminated poly(ethyleneimine) (PEI-ENE) was produced using molecules capable of reacting with PEI by addition reaction and having at the same time vinyl functionally. Examples of such molecules - having epoxy and vinyl functionality - are epoxy decene, allyl glycidyl ether and glycidyl methacrylate. PEI-ENE was synthesized by by addition reaction of the amine groups present in PEI with epoxy - vinyl grafting agents. Generally, this is achieved by slow addition of epoxy vinyl molecules to PEI and letting the mixture react at 50°C under stirring for at least 8h.

The allyl terminated poly(ethyleneimine) (PEI-ENE) can be used as-such as curable ion exchange precursor if its viscosity is sufficiently high. It can be crosslinked by means of thermally or UV initiated radical curing. It is clear that other monomers such as mono or multifunctional vinyls or acrylates can be added to the ion exchange precursor (PEI-ENE) to modify the properties of the crosslinked polymer.

The allyl terminated poly(ethyleneimine) was mixed with initiator to form a curable ion exchange precursor. The ion exchange precursor was applied on a porous substrate using a doctor blade method with a blade gap of 30-120 $\mu$m. Good results were obtained as long as the ion exchange precursor has a viscosity of at least 3000 mPa s. Both thermal and UV-initiation were tested. UV initiation was done with high power UV radiation. Curing was completed within a few minutes. In the case of thermal curing the coated substrate is exposed to a sufficiently high temperature (depending on the initiator). When elevated temperatures were used, good results were obtained if a viscosity of at least 3000 mPa s at elevated temperature was maintained. Therefore the RT viscosity of formulations intended for heat induced curing needs to be considerably higher than in case of those not heated for curing.

After curing the composite ion exchange membrane did not require further processing or washing. However, depending on the application and the ion exchange precursor composition, the membrane may require activation, that is to say exchange between protonated and ionic form of the ion exchange moieties, may be beneficial.

## Example 2 : Vinyl functionalized PEI

Commercial branched poly(etyleneimine) has been used to form an ion exchange membrane according to example 1. This membrane was further tested.

Commercial branched poly(etyleneimine) has been vinyl functionalized by reacting it with glycidyl methacrylate. The modified PEI (PEI-ENE) was formulated with radically reactive crosslinkers and used for the fabrication of hierarchical anion exchange membranes.

PEI vinyl functionalization : branched PEI with a molecular weight (MW) of 2000 g/mol has been modified by grafting glycidyl methacrylate onto it. A vinyl modified-radically reactive poly(ethyleneimine) has been obtained.

3 g of said branched PEI has been diluted with 0.8g of isopropyl alcohol. 2g of glycidyl methacrylate have been added dropwise under mild stirring. The mixture has been left reacting for 1 hour until an increase in viscosity was noticed. It is expected that after this time glycidyl methacrylate has fully reacted with PEI through an amine-epoxy reaction, grafting vinyl groups on the polymer.

Membrane fabrication: 5.8 g of the functionalized PEI have been formulated with 0.3 g of tri(ethylene glycol) divinyl ether and 0.15 g of 2-hydroxy-2-methyl-1-phenylpropanone (photoinitiator). After mixing, the mixture has been has been applied on the porous substrate by means of blade coating using an automatic film applicator and cured in a UV conveyor. A 50 $\mu$m thick layer has been obtained after curing.

The fabricated ion exchange membrane showed an electrical resistance of $6.9 \pm 0.2\,\Omega$.cm$^2$ measured in 0.5M NaCl and a Cu$^{2+}$ permeability of lower than 10E-6 cm/min estimated through a diffusion test. In electrodialysis desalination experiments the membrane allowed to reach a current efficiency of 84% when combined with sulfonated hierarchical anion exchange membranes in a 1 cell pair stack with 2 mm spacers.

## Example 3 : PEI- aldehyde

A crosslinking solution was prepared by mixing 5 wt.% gutaraldehyde (GTA) in water. A porous substrate was impregnated with said crosslinking solution. The excess of the crosslinking solution was removed. PEI was applied on a porous substrate using a doctor blade method with a blade gap of 30-120 $\mu$m. Good results were obtained as long as the ion exchange precursor has a viscosity of at least 3000 mPa s. The PEI layer was then soaked in a bath of crosslinking solution. The membrane was then washed in water to remove GTA residue.

The composite ion exchange membranes created following this procedure with a 20-30 $\mu$m ion exchange layer thickness was tested. These membranes showed a surface electric resistivity of 4-5 ohm cm$^2$ measured in 0.5M NaCl.

## Example 4 : PEI - Epoxy

A reactive PEI epoxy mixture was formed by mixing PEI with an epoxy crosslinking agent according to a predetermined ratio. The epoxy crosslinking agents were diglycidyl ether, butanediol diglycidyl ether and diepoxyoctane. The reactive PEI epoxy micture was applied on a porous substrate using a doctor blade method with a blade gap of 30-120 $\mu$m. Good results were obtained as long as the ion exchange precursor has a viscosity of at least 3000 mPa s. The formed layer was cured in air at room temperature. Elevated temperatures sped up the reaction but were not required. Elevated temperatures had a side effect of increasing the viscosity of the reactive mixture, and thus increasing the impregnation of the mixture into the porous support.

The composite ion exchange membranes created following this procedure with a 20-30 $\mu$m ion exchange layer thickness were tested. These membranes showed a surface electric resistivity of 4-5 Ohm cm$^2$ measured in 0.5M NaCl, showing a similar result to that noted in example 3.

## Examples 5-7

Two PVC-SiO2 porous substrate with median pore size of 60 nm, volume porosity 60.3 %, and a thickness of 600 $\mu$m were used as porous support. Example 5 consists of this substrate coated with UV-cured PEI according to example 1. Example 6 consists of this substrate coated with GTA-crosslinked PEI according to example 3.

The ion exchange coating of example 6 (average thickness of 61 $\mu$m) was measured to be slightly thinner than that of example 5 (average thickness of 72 $\mu$m). Comparative example 7 is a commercially available anion exchange membrane known under the trade name "RELAX AMPHES" (comparative example 7). RALEX membranes are heterogeneous - fabric reinforced ion exchange membrane, widely used in commercial electrodialysis installation. Because of their reinforced structure these membranes are considered a good benchmark for the proposed composite materials.

Examples 5, 6 and comparative example 7 were tested for their membrane performance.

Area Specific Resistance (ASR)

The ASR of examples 5, 6 and 7 were measured. Example 5 had an ASR of 7.1 $\Omega \cdot cm^2$. Example 6 had an ASR of 5.2 $\Omega \cdot cm^2$. Example 7 had an ASR of 9.0 $\Omega \cdot cm^2$. PEI based composite membrane showed a remarkably lower ASR in comparison to the commercial material. Without being bound by theory, the lower resistance value of the composite membrane is likely granted by the low thickness of the ion exchange layer compared to the thickness of the heterogeneous commercial membrane. The porous substrate had an ASR of 2.7 $\Omega \cdot cm^2$.

Membrane selectivity and transport numbers

[0091] Membrane selectivity values of examples 5, 6 and 7 were 94%, 75% and 90% respectively. Despite their lower ASR, PEI based composite membranes showed selectivity values comparable with the commercial membrane (example 5), or lower but still adequate for application (example 6). It is worth to note that example 6 featured an ASR value substantially lower than examples 5 and 7. The calculated transport numbers for anions follow the same trend as selectivity, with example 5 (0.90) reaching the highest value followed by example 7 (0.89) and example 6 (0.81).

The through plane "area specific resistance" (ASR) of the membranes in 0.5 M NaClaq was measured. A laboratory made two compartments test cell with a measurement area (A) of 19.63 $cm^2$ was used. The membrane was installed between the two half-cells, each of them equipped with an auxiliary electrode at the end of the compartment. Two Ag/AgCl reference electrodes were placed in capillaries with openings close to the membrane surface. Polarization curves were recorded with currents up to 0.5 A using a 10 mA/scan rate. The experiment was controlled with a potentiostat (Origalflex 01A-Origalys, France), which was used to set current between the working and auxiliary electrode and measure the potential between the two reference electrodes separated by the membrane.

The membranes were equilibrated in 0.5M NaClaq at room temperature for 48h before the measurement. The resistance value was extrapolated from the slope of the ohmic part of the polarization curves. The ASR of the membrane was determined as the difference of the cell resistance with and without membrane according to the following equation: ASR = $(Rm - R0) \cdot A$, where Rm and R0 are the cell resistance with and without the membrane, respectively, and A is the active measurement area.

The membrane selectivity and transport numbers were estimated from membrane potential measurements. A membrane sample, equilibrated in 0.05M KCl was mounted in a two-compartment test cell with an active membrane area of 19.63 $cm^2$, equipped with two mounted reference electrodes.

For the measurement, one half cell was filled with a KCl solution with a concentration of 0.5M (C+) while in the other half cell the concertation was varied from 0.05M to 0.5M (0.05M, 0.1M, 0.2M, 0.4M, 0.5M). The equilibrium membrane potential was recorded using a potentiostat (Origalflex 01A- Origalys, France) in all the previously described configurations.

The calculation of membrane selectivity and transport numbers are based on the Nernst equation, that for the presented system can be written as: $E = -(t_+ - t_-)RT/(z_f F) \ln(a_1/a_2)$, where $z_i$, $t_i$, $a_i$ are the respectively the charge number, the transport number and the activity of the respective higher concentration and lower concentration solution.

The membrane selectivity was computed as the ratio of the theoretical and the measured membrane potential using 0.5M KCl and 0.1M KCl as test solutions. This can be expressed as : $\alpha$[%]= $Em$ (0.5/0.1) / [$Et$ (0.5/0.1)] * 100. The theoretical membrane potential for a perfectly selective membrane was calculated using the Equation 1. A value of 36.68 mV was obtained for the reported measurements conditions.

To compute the transport numbers, the measured membrane potentials was plotted as a function of ln ($a1/a2$) to obtain the slope $E$/(ln ($a1/a2$)). The equation was then solved imposing the condition $t_+ + t_- = 1$.

Electrodialysis (ED) testing

In electrodialysis testing, fabricated composite membranes (ex. 5 and 6) showed performance in line with the commercial material (ex. 7). Current efficiency values of 91.9% and 94.8% were calculated for the experiments performed with the examples 5 and 6 respectively, whereas a value of 95% was calculated for example 7. The energy consumption was similar in the three cases: 2.41 Wh/g for example 7, 2.42 Wh/g for example 6 and 2.49 Wh/g for example 5.

The electrodialysis (desalination) experiments were carried out in a custom designed electrodialysis cell with 24 $cm^2$ active membrane area and 2 mm membrane to membrane distance. The stack has been arranged in order obtain a four compartments cell configuration: dilute and concentrate compartments and two electrode rinsing compartment (as shown in the scheme in Figure 1). A 5 g/L NaCl solution was used as test solution (dilute and concentrate) while a 10 g/L $Na_2SO_4$ was used as the electrode rinsing solution. The solutions were circulated through the cell with a flow rate of 250 ml/min to ensure a turbulent flow and prevent polarization. The experiments were executed in voltage-controlled mode for a duration of 3 hours, imposing a voltage drop of 5V across the cell. A potentiostat (Origaflex 01A, Origalys France) was used as power supply and to monitor the process current throughout the experiment, with a sampling interval of 10 s. The conductivity of the dilute solution was logged every minute using a benchtop conductometer (Inolab 7310, WTW Germany).

The power consumption and dilute demineralization rate were monitored throughout the experiment. The current efficiency ($\eta$) end energy consumption (E) of the process have been calculated according to :

$$\eta = \frac{z\,F\,Vd(Ct - C0)}{n\,\int_0^t I(t)dt}$$

$$E = \int_0^t \frac{U\,I(t)}{CtVdMb}\,dt$$

where z is the absolute valence of the transported ion, F is the Faraday constant, $C_t$ and $C_0$ are the dilute NaCl concentrations at time t and 0, Vd is the dilute solution volume, n is the number of cell pairs, I the current, U the voltage, Mb the molecular mass of NaCl and t the process duration.

## Claims

1. Composite ion exchange membrane comprising:

    - a porous support having a thickness between 10 and 600 $\mu$m and an median pore size between 10 and 10000 nm, wherein the median pore size is determined by mercury intrusion porosimetry,
    - an ion exchange layer which is coated onto at least one side of said porous support, wherein said ion exchange layer has a thickness between 10 and 100 $\mu$m and said ion exchange layer comprises poly(ethylenimine) PEI, wherein the thickness of said ion exchange layer is measured by image analysis of microscopy images.

2. Composite ion exchange membrane according to claim 1, wherein PEI is crosslinked.

3. Composite ion exchange membrane according to claim 1, wherein PEI is interlaced with a crosslinked polymer, forming an interpenetrating polymer network (IPN) which is adhered to the porous support.

4. Process for making a composite ion exchange membrane, comprising the steps of:

    - providing a porous support having a thickness between 10 and 600 $\mu$m and a median pore size between 10 and 10000 nm, wherein the median pore size is determined by mercury intrusion porosimetry,
    - coating an ion exchange layer comprising poly(ethylenimine) (PEI) onto at least one side of said porous support, wherein said ion exchange layer has a thickness between 10 and 100 $\mu$m, wherein the thickness of said ion exchange layer is measured by image analysis of microscopy images.

5. Process according to claim 4, wherein porous support is impregnated with a cross linker suitable for crosslinking PEI, and PEI is subsequently coated onto said porous support by blade coating.

6. Process according to claim 4-5, wherein PEI is coated on one side of said porous support, and an anionic ionomer is coated onto the opposing side of said porous support.

7. Process according to claim 4-6, wherein the method comprises the steps of:

    - providing a porous support having a thickness between 10 and 600 $\mu$m and a median pore size between 10 and 10000 nm, wherein the median pore size is determined by mercury intrusion porosimetry,
    - impregnating at least one side of said porous support with a reactive composition comprising at least one bifunctional crosslinker, preferably a dialdehyde.
    - coating PEI onto said reactive surface, and
    - crosslinking PEI to said reactive composition by immersion in a bath of said reactive composition.

8. Process according to claim 7, wherein the bifunctional crosslinker is glutaraldehyde (GTA).

9. Process according to claim 8, wherein the reactive composition is an aqueous solution of 1 to 10 wt.% GTA in water.

10. Process according to any of the claims claim 4-6, wherein the method comprises the steps of:

    - Providing a porous support having a thickness between 10 and 600 $\mu$m and a median pore size between 10 and 10000 nm, wherein the median pore size is determined by mercury intrusion porosimetry,
    - Providing a reactive PEI formulation,
    - Coating said reactive PEI formulation onto at least one side of said porous support, and
    - Curing said reactive PEI formulation.

11. Process according to claim 10, wherein said reactive PEI formulation comprises PEI and a bifunctional crosslinker, preferably an epoxy, in an amount suitable to form a curable composition.

12. Process according to any of claims 10 or 11, wherein said reactive PEI formulation is cured in air at room temperature.

13. Process according to any of claims 10-12, wherein said reactive PEI formulation comprises a PEI-copolymer or a modified PEI-polymer, which comprises vinyl functional groups.

14. Process according to claim 13, wherein said reactive PEI formulation is cured through thermally or UV initiated radical polymerization.


**Patentansprüche**

1. Ionenaustausch-Verbundmembran, Folgendes umfassend:

　　- einen porösen Träger, der eine Dicke zwischen 10 und 600 μm und eine Medianporengröße zwischen 100 und 10000 nm aufweist, wobei die Medianporengröße durch Quecksilberporosimetrie bestimmt wird,
　　- eine Ionenaustauschschicht, die auf mindestens eine Seite des porösen Trägers aufgetragen ist, wobei die Ionenaustauschschicht eine Dicke zwischen 10 und 100 μm aufweist und die Ionenaustauschschicht Poly(ethylenimin), PEI, umfasst, wobei die Dicke der Ionenaustauschschicht durch Bildanalyse von Mikroskopiebildern gemessen wird.

2. Ionenaustausch-Verbundmembran nach Anspruch 1, wobei das PEI vernetzt ist.

3. Ionenaustausch-Verbundmembran nach Anspruch 1, wobei das PEI mit einem vernetzten Polymer verschränkt ist, wodurch ein interpenetrierendes Polymernetz (IPN) gebildet ist, das an den porösen Träger angeheftet ist.

4. Verfahren zur Herstellung einer Ionenaustausch-Verbundmembran, die folgenden Schritte umfassend:

　　- Bereitstellen eines porösen Trägers, der eine Dicke zwischen 10 und 600 μm und eine Medianporengröße zwischen 10 und 10000 nm aufweist, wobei die Medianporengröße durch Quecksilberporosimetrie bestimmt wird,
　　- Auftragen einer Ionenaustauschschicht, die Poly(ethylenimin), PEI, umfasst, auf mindestens eine Seite des porösen Trägers, wobei die Ionenaustauschschicht eine Dicke zwischen 10 und 100 μm aufweist, wobei die Dicke der Ionenaustauschschicht durch Bildanalyse von Mikroskopiebildern gemessen wird.

5. Verfahren nach Anspruch 4, wobei der poröse Träger mit einem Vernetzungsmittel imprägniert wird, der zum Vernetzen von PEI geeignet ist, und danach PEI durch Streichauftrag auf den porösen Träger aufgetragen wird.

6. Verfahren nach Anspruch 4 bis 5, wobei das PEI auf eine Seite des porösen Trägers aufgetragen wird und auf die gegenüberliegende Seite des porösen Trägers ein anionisches Ionomer aufgetragen wird.

7. Verfahren nach Anspruch 4 bis 6, wobei das Verfahren die folgenden Schritte umfasst:

　　- Bereitstellen eines porösen Trägers, der eine Dicke zwischen 10 und 600 μm und eine Medianporengröße zwischen 10 und 10000 nm aufweist, wobei die Medianporengröße durch Quecksilberporosimetrie bestimmt wird,
　　- Imprägnieren mindestens einer Seite des porösen Trägers mit einer reaktiven Zusammensetzung, die mindestens ein bifunktionelles Vernetzungsmittel umfasst, vorzugsweise Dialdehyd,
　　- Auftragen von PEI auf die reaktive Oberfläche und
　　- Vernetzen des PEI mit der reaktiven Zusammensetzung durch Tauchen in ein Bad aus der reaktiven Zusammensetzung.

8. Verfahren nach Anspruch 7, wobei das bifunktionelle Vernetzungsmittel ein Glutaraldehyd (GTA) ist.

9. Verfahren nach Anspruch 8, wobei die reaktive Zusammensetzung eine wässrige Lösung von 1 bis 10 Gew.-% GTA in Wasser ist.

10. Verfahren nach einem der Ansprüche 4 bis 6, wobei das Verfahren die folgenden Schritte umfasst:

　　- Bereitstellen eines porösen Trägers, der eine Dicke zwischen 10 und 600 μm und eine Medianporengröße zwischen 10 und 10000 nm aufweist, wobei die Medianporengröße durch Quecksilberporosimetrie bestimmt wird,
　　- Bereitstellen einer reaktiven PEI-Formulierung,
　　- Auftragen der reaktiven PEI-Formulierung auf mindestens eine Seite des porösen Trägers und
　　- Härten der reaktiven PEI-Formulierung.

11. Verfahren nach Anspruch 10, wobei die reaktive PEI-Formulierung PEI und ein bifunktionelles Vernetzungsmittel umfasst, vorzugsweise ein Epoxid, in einer Menge, die geeignet ist, um eine härtbare Zusammensetzung zu bilden.

12. Verfahren nach einem der Ansprüche 10 oder 11, wobei die reaktive PEI-Formulierung an Luft bei Raumtemperatur gehärtet wird.

13. Verfahren nach einem der Ansprüche 10 bis 12, wobei die reaktive PEI-Formulierung ein PEI-Copolymer oder ein modifiziertes PEI-Polymer umfasst, das vinylfunktionale Gruppen umfasst.

14. Verfahren nach Anspruch 13, wobei die reaktive PEI-Formulierung durch thermisch oder UV initiierte Radikalpolymerisation gehärtet wird.

## Revendications

1. Membrane d'échange d'ions composite comprenant :

    - un support poreux présentant une épaisseur entre 10 et 600 $\mu$m et une taille médiane de pore entre 10 et 10 000 nm, dans laquelle la taille médiane de pore est déterminée par porosimétrie par intrusion au mercure,
    - une couche d'échange d'ions qui est appliquée sur au moins un côté dudit support poreux, dans laquelle ladite couche d'échange d'ions présente une épaisseur entre 10 et 100 $\mu$m et ladite couche d'échange d'ions comprend de la poly(éthylénimine) PEI, dans laquelle l'épaisseur de ladite couche d'échange d'ions est mesurée par analyse d'image d'images obtenues par microscopie.

2. Membrane d'échange d'ions composite selon la revendication 1, dans laquelle la PEI est réticulée.

3. Membrane d'échange d'ions composite selon la revendication 1, dans laquelle la PEI est entrelacée avec un polymère réticulé, formant un réseau polymère interpénétré (IPN) qui est fixé sur le support poreux.

4. Procédé de fabrication d'une membrane d'échange d'ions composite, comprenant les étapes de :

    - fourniture d'un support poreux présentant une épaisseur entre 10 et 600 $\mu$m et une taille médiane de pore entre 10 et 10 000 nm, dans lequel la taille médiane de pore est déterminée par porosimétrie par intrusion au mercure,
    - application d'une couche d'échange d'ions comprenant de la poly(éthylénimine) (PEI) sur au moins un côté dudit support poreux, dans lequel ladite couche d'échange d'ions présente une épaisseur entre 10 et 100 $\mu$m, dans lequel l'épaisseur de ladite couche d'échange d'ions est mesurée par analyse d'image d'images obtenues par microscopie.

5. Procédé selon la revendication 4, dans lequel le support poreux est imprégné avec un agent de réticulation approprié pour la réticulation de la PEI, et la PEI est ensuite appliquée sur ledit support poreux par couchage à la lame.

6. Procédé selon la revendication 4 ou 5, dans lequel la PEI est appliquée sur un côté dudit support poreux, et un ionomère anionique est appliqué sur le côté opposé dudit support poreux.

7. Procédé selon la revendication 4 à 6, dans lequel le procédé comprend les étapes de :

    - fourniture d'un support poreux présentant une épaisseur entre 10 et 600 $\mu$m et une taille médiane de pore entre 10 et 10 000 nm, dans lequel la taille médiane de pore est déterminée par porosimétrie par intrusion au mercure,
    - imprégnation d'au moins un côté dudit support poreux avec une composition réactive comprenant au moins un agent de réticulation bifonctionnel, de préférence un dialdéhyde.
    - application de PEI sur ladite surface réactive, et
    - réticulation de PEI sur ladite composition réactive par immersion dans un bain de ladite composition réactive.

8. Procédé selon la revendication 7, dans lequel l'agent de réticulation bifonctionnel est du glutaraldéhyde (GTA).

9. Procédé selon la revendication 8, dans lequel la composition réactive est une solution aqueuse de 1 à 10 % en poids de GTA dans de l'eau.

10. Procédé selon l'une quelconque des revendications 4 à 6, dans lequel le procédé comprend les étapes de :

    - Fourniture d'un support poreux présentant une épaisseur entre 10 et 600 $\mu$m et une taille médiane de pore entre 10 et 10 000 nm, dans lequel la taille médiane de pore est déterminée par porosimétrie par intrusion au mercure,
    - Fourniture d'une formulation de PEI réactive,
    - Application de ladite formulation de PEI réactive sur au moins un côté dudit support poreux, et
    - Durcissement de ladite formulation de PEI réactive.

11. Procédé selon la revendication 10, dans lequel ladite formulation de PEI réactive comprend de la PEI et un agent de réticulation bifonctionnel, de préférence un époxy, en une quantité appropriée pour former une composition durcissable.

12. Procédé selon l'une quelconque des revendications 10 ou 11, dans lequel ladite formulation de PEI réactive est durcie dans l'air à température ambiante.

**13.** Procédé selon l'une quelconque des revendications 10 à 12, dans lequel ladite formulation de PEI réactive comprend un copolymère de PEI ou un copolymère de PEI modifié, qui comprend des groupes fonctionnels vinyles.

**14.** Procédé selon la revendication 13, dans lequel ladite formulation de PEI réactive est durcie par polymérisation radicalaire initiée thermiquement ou par UV.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9266069 B
- US 5795668 A

- US 2011290727 A

**Non-patent literature cited in the description**

- *CHEMICAL ABSTRACTS,* 9002-98-2